# EUROPÄISCHE PATENTSCHRIFT

(11) **EP 3 276 090 B1**
(45) Veröffentlichungstag und Bekanntmachung des Hinweises auf die Patenterteilung: **10.06.2020**
(21) Anmeldenummer: 17183060.7
(22) Anmeldetag: 25.07.2017
(51) Int. Cl.: E03C 1/04, E03C 1/05

(54) **ARMATUR**
FAUCET
ARMATURE

(30) Priorität: 27.07.2016 DE 102016113832
(43) Veröffentlichungstag der Anmeldung: 31.01.2018
(73) Patentinhaber: BLANCO GmbH + Co KG, 75038 Oberderdingen (DE)
(72) Erfinder: Zindler, Johann, 75015 Bretten (DE); Becker, Bernd, 75057 Kürnbach (DE); Gundersen, Eric, Medford, NJ 08055 (US)
(74) Vertreter: Hoeger, Stellrecht & Partner Patentanwälte mbB

(56) Entgegenhaltungen:
- WO-A1-2016/106339
- CA-A1- 2 532 528
- CA-A1- 2 918 026

## Beschreibung

Die vorliegende Erfindung betrifft eine Armatur, welche einen Sockel, eine Schlauchbrause und einen an dem Sockel gehaltenen Arm umfasst, wobei der Arm eine Schlauchbrausen-Aufnahme, an welcher die Schlauchbrause in einer Ruheposition lösbar gehalten ist, umfasst.

Armaturen dieser Art sind beispielsweise unter der Bezeichnung "Semi-Profi-Armatur" bekannt.

Bei solchen Armaturen wird der Durchtritt von Wasser durch die Schlauchbrause von einer Bedienungsperson durch Betätigen eines Wählhebels an einem Mischventil der Armatur oder durch Betätigen eines Schalters an einem Brausekopf der Schlauchbrause gesteuert.

Die WO 2016/106339 A1 und die CA 2 532 528 A1 offenbaren Armaturen, welche einen Sockel, eine Schlauchbrause und einen an dem Sockel gehaltenen Auslauf umfassen, wobei der Auslauf eine Schlauchbrausen-Aufnahme, an welcher die Schlauchbrause in einer Ruheposition lösbar gehalten ist, umfasst, wobei die Armatur einen Sensor für die Erfassung einer Anwesenheit einer Hand einer Bedienungsperson in einem Detektionsbereich des Sensors umfasst und wobei der Sensor an dem Auslauf angeordnet ist.

Die CA 2 918 026 A1 offenbart eine Armatur gemäß dem Oberbegriff von Anspruch 1.

Der vorliegenden Erfindung liegt die Aufgabe zugrunde, eine Armatur der eingangs genannten Art zu schaffen, bei welcher der Durchtritt von Wasser durch die Schlauchbrause von einer Bedienungsperson besonders einfach und rasch steuerbar ist.

Diese Aufgabe wird durch eine Armatur nach Anspruch 1 gelöst.

Dadurch, dass bei der erfindungsgemäßen Armatur der Sensor an dem, von dem Sockel der Armatur nach vorne zu der Bedienungsperson hin gerichteten, Arm angeordnet ist, kann eine Bedienungsperson eine Auslösung des Durchtritts von Wasser durch die Schlauchbrause und/oder ein Stoppen des Durchtritts von Wasser durch die Schlauchbrause mittels einer sehr kurzen Handbewegung vom Bereich der Schlauchbrausen-Aufnahme in den Detektionsbereich des Sensors bewirken.

Dabei kann die Hand der Bedienungsperson alleine oder zusammen mit einem Griffabschnitt der Schlauchbrause, an welcher die Hand der Bedienungsperson angreift, in den Detektionsbereich des Sensors bewegt werden.

Wenn ein Sensor am Auslauf einer Armatur oder am Sockel einer Armatur angeordnet ist, so ist der Betätigungsweg für die Hand einer Bedienungsperson bis zu dem betreffenden Sensor weit, was die Betätigung der Armatur durch die Bedienungsperson verlangsamt und umständlich macht. Außerdem kann ein am Auslauf oder am Sockel der Armatur positionierter Sensor vermehrte Fehlauslösungen zur Folge haben.

Eine Positionierung eines Sensors am Auslauf oder am Sockel einer Armatur stört das Design der Armatur.

Die Positionierung des Sensors nahe an der Schlauchbrausen-Aufnahme erlaubt eine Auslösung einer Signalerzeugung des Sensors durch eine sehr kurze Bewegung der Hand der Bedienungsperson, ohne dass hierbei häufige Fehlauslösungen auftreten.

Eine Fehlauslösung während des Hantierens der Bedienungsperson mit Gegenständen in einem Becken, insbesondere in einem Spülbecken, ist weitgehend ausgeschlossen.

Bei einer bevorzugten Ausgestaltung der Erfindung ist vorgesehen, dass der Arm der Armatur eine Sensoraufnahme aufweist, in welcher der Sensor zumindest teilweise aufgenommen ist.

Besonders günstig ist es, wenn der Sensor im Wesentlichen vollständig in der Sensoraufnahme aufgenommen ist. Hierdurch ist der Sensor insbesondere vor Spritzwasser geschützt.

Die Sensoraufnahme weist vorzugsweise eine Sensoröffnung auf, durch welche der Sensor von einem Außenraum der Armatur aus zugänglich ist.

Eine solche Sensoröffnung kann durch eine, vorzugsweise transparente, Abdeckung verschlossen sein.

Grundsätzlich kann der Detektionsbereich des Sensors, je nach Funktionalität, oberhalb des Arms, seitlich neben dem Arm oder unterhalb des Arms angeordnet sein.

Bei einer bevorzugten Ausgestaltung der Erfindung ist vorgesehen, dass der Detektionsbereich des Sensors unterhalb des Arms, insbesondere vertikal unter dem Arm, angeordnet ist.

Dafür ist es von Vorteil, wenn die Sensoröffnung an einer, vorzugsweise dem Sockel der Armatur zugewandten, Unterseite des Arms angeordnet ist.

Der Arm weist vorzugsweise in dem Bereich, an dem der Sensor angeordnet ist, einen im Wesentlichen rechteckigen oder ovalen Querschnitt auf.

Um genügend Platz für die Aufnahme des Sensors in dem Arm zu bieten, ist vorzugsweise vorgesehen, dass der Arm in dem Bereich, an dem Sensor angeordnet ist, eine Dicke, das heißt eine im montierten Zustand der Armatur horizontale Ausdehnung senkrecht zu einer Längsachse des Arms, von mindestens ungefähr 10 mm, insbesondere von mindestens ungefähr 15 mm, aufweist.

Grundsätzlich kann der Sensor als ein beliebiger Annäherungs- und/oder Bewegungssensor ausgebildet sein.

Beispielsweise kann der Sensor als ein Infrarotsensor, Ultraschallsensor, induktiver Sensor oder kapazitiver Sensor ausgebildet sein.

Bei einer bevorzugten Ausgestaltung der Erfindung ist vorgesehen, dass der Sensor einen Infrarotsensor umfasst und vorzugsweise als ein Infrarotsensor ausgebildet ist.

Ferner umfasst die Armatur vorzugsweise eine Steuervorrichtung, welche ein Sperrventil ansteuert, das den Durchtritt von Wasser durch die Schlauchbrause freigibt oder sperrt, wenn der Sensor eine Anwesenheit und/oder eine Bewegung einer Hand einer Bedienungsperson in dem Detektionsbereich des Sensors erfasst.

Das Sperrventil kann insbesondere als ein Elektromagnetventil ausgebildet sein.

Um zusätzlich zu der Steuerung des Durchtritts von Wasser durch die Schlauchbrause mittels des Sensors eine weitere Steuerungsmöglichkeit für die Bedienungsperson zu schaffen, kann vorgesehen sein, dass die Schlauchbrause einen Schalter zum Freigeben und/oder Sperren des Durchtritts von Wasser durch die Schlauchbrause und/oder zum Umschalten zwischen verschiedenen Strahlformen des aus der Schlauchbrause austretenden Wasserstrahls umfasst.

Ein solcher Schalter kann insbesondere an einem Griffabschnitt der Schlauchbrause angeordnet sein.

Zwischen dem Griffabschnitt der Schlauchbrause und der Ankopplung der Schlauchbrause an den Sockel der Armatur ist vorzugsweise ein biegeflexibler Schlauchabschnitt der Schlauchbrause vorgesehen.

Der Schalter ist vorzugsweise tiefer als der Sensor angeordnet, wenn die Schlauchbrause in der Ruheposition an dem Arm, insbesondere an der Schlauchbrausen-Aufnahme des Arms, gehalten ist.

Die Schlauchbrause kann einen biegeflexiblen Schlauchabschnitt umfassen.

Der biegeflexible Schlauchabschnitt ist vorzugsweise zumindest teilweise, insbesondere im Wesentlichen vollständig, außerhalb des Armes der Armatur angeordnet, wenn die Schlauchbrause in der Ruheposition an der Schlauchbrausen-Aufnahme gehalten ist.

Ferner kann die Schlauchbrause mit einer Ummantelung aus einem metallischen Material, insbesondere aus einem Edelstahlmaterial, versehen sein.

Diese Ummantelung kann insbesondere als ein Wellschlauch ausgebildet sein.

Grundsätzlich kann der Arm der Armatur drehfest an dem Sockel der Armatur angeordnet sein und dabei insbesondere im montierten Zustand der Armatur nach vorne, zu einer Bedienungsperson hin, von dem Sockel vorstehen, so dass insbesondere ein Auslauföffnung der Schlauchbrause in der Ruheposition der Schlauchbrause über einem Becken, insbesondere einem Spülbecken, angeordnet ist, welchem die Armatur zugeordnet ist.

Bei der Erfindung ist vorgesehen, dass der Arm schwenkbar an dem Sockel gehalten ist.

Besonders bevorzugt ist der Arm um eine vertikale Schwenkachse schwenkbar an dem Sockel gehalten.

Um den Betätigungsweg für die Auslösung des Sensors durch die Bedienungsperson möglichst klein zu halten, ist es günstig, wenn im montierten Zustand der Armatur der horizontale Abstand d_{B} des Sensors von der Schlauchbrause in deren Ruheposition kleiner ist als der horizontale Abstand d_{S} des Sensors von der Schwenkachse, um welche der Arm schwenkbar an dem Sockel gehalten ist.

Für den gestalterischen Eindruck der Armatur ist es besonders günstig, wenn der Sensor für eine Bedienungsperson bei Betrachten der Armatur aus einer Position oberhalb des Arms nicht sichtbar ist.

Dies kann insbesondere dadurch erreicht werden, dass der Sensor vollständig in einer Sensoraufnahme des Armes angeordnet ist, welche eine an einer Unterseite des Armes angeordnete Sensoröffnung aufweist.

Der Sensor ist an dem Auslegerabschnitt des Armes angeordnet, der die Schlauchbrausen-Aufnahme des Armes mit dem Basisabschnitt, an welchem der Arm schwenkbar an dem Sockel der Armatur gehalten ist, verbindet.

Der Auslegerabschnitt erstreckt sich im Wesentlichen längs einer Radialrichtung der Schwenkachse, um welche der Arm schwenkbar an dem Sockel gehalten ist.

Dabei kann eine Längsachse des Auslegerabschnitts gegenüber der Radialrichtung um einen spitzen Winkel von vorzugsweise höchstens 10° verkippt sein.

Vorzugsweise ist diese Verkippung derart, dass der Auslegerabschnitt mit wachsendem Abstand von der Schwenkachse beziehungsweise von der vertikalen Längsmittelachse des Sockels ansteigt.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine Seitenansicht einer Armatur, welche einen Sockel, eine Schlauchbrause und einen an dem Sockel schwenkbar gehaltenen Arm mit einer Schlauchbrause-Aufnahme, an welcher die Schlauchbrause in einer Ruheposition lösbar gehalten ist, umfasst;
- Fig. 2: eine Vorderansicht der Armatur aus Fig. 1, mit der Blickrichtung in Richtung des Pfeiles 2 in Fig. 1; und
- Fig. 3: eine Ansicht der Armatur aus den Fig. 1 und 2 von unten, mit der Blickrichtung in Richtung des Pfeiles 3 in Fig. 1.

Gleiche oder funktional äquivalente Elemente sind in allen Figuren mit denselben Bezugszeichen bezeichnet.

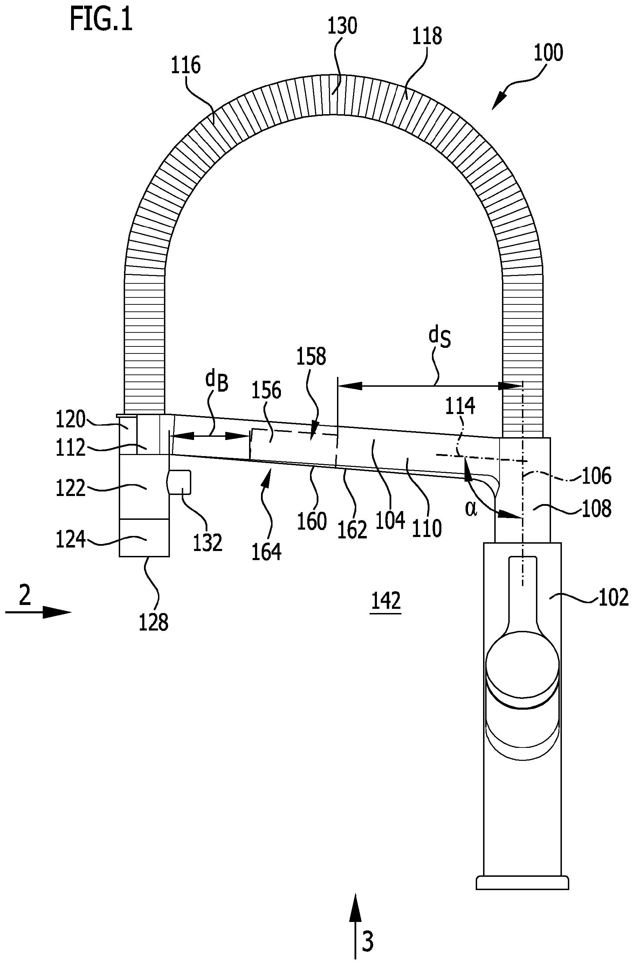

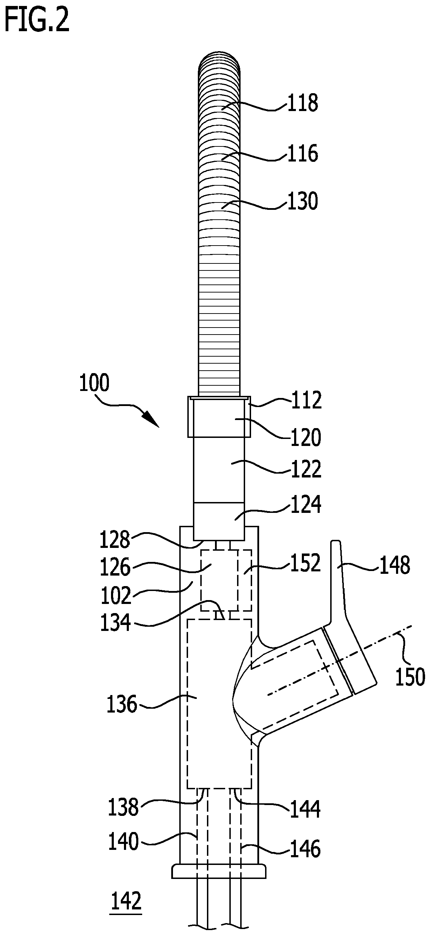

Eine in den Fig. 1 bis 3 dargestellte, als Ganzes mit 100 bezeichnete Armatur, die zur Verwendung an einem Becken, insbesondere an einem Spülbecken, vorgesehen ist, umfasst einen Sockel 102, welcher an einem geeigneten Untergrund, beispielsweise an einer Spüle oder einer Arbeitsplatte, festlegbar ist, sowie einen von dem Sockel 102 getragenen Arm 104.

Der Arm 104 ist um eine Schwenkachse 106 schwenkbar an dem Sockel 102 gehalten.

Die Schwenkachse 106 ist im montierten Zustand der Armatur 100 vorzugsweise im Wesentlichen vertikal ausgerichtet.

Der Arm 104 umfasst einen Basisabschnitt 108, welcher vorzugsweise im Wesentlichen hohlzylindrisch ausgebildet ist und dessen Längsmittelachse vorzugsweise im Wesentlichen mit der Schwenkachse 106 übereinstimmt, einen sich im Wesentlichen in der Radialrichtung der Schwenkachse 106 von dem Basisabschnitt 108 weg erstreckenden Auslegerabschnitt 110 und eine an dem dem Basisabschnitt 108 abgewandten Ende des Auslegerabschnitts 110 angeordnete Schlauchbrausen-Aufnahme 112.

Der Auslegerabschnitt 110 erstreckt sich im montierten Zustand der Armatur 100 vorzugsweise von dem Basisabschnitt 108 ausgehend bis zu der Schlauchbrausen-Aufnahme 112 etwas nach oben, so dass eine Längsachse 114 des Auslegerabschnitts 110 mit der Schwenkachse 106 einen stumpfen Winkel a, vorzugsweise einen Winkel zwischen ungefähr 90° und ungefähr 100°, beispielsweise von ungefähr 94°, einschließt.

Der Sockel 102 und/oder der Arm 104 der Armatur 100 ist vorzugsweise aus einem metallischen Material, insbesondere aus einem Edelstahlmaterial, gebildet.

Die Armatur 100 umfasst ferner eine Schlauchbrause 116, die ihrerseits einen Schlauchabschnitt 118, welcher schwenkbar an dem Sockel 102 angeschlossen ist, einen an dem dem Sockel 102 abgewandten Ende des Schlauchabschnitts 118 angeordneten Halteabschnitt 120, einen auf der dem Schlauchabschnitt 118 abgewandten Seite des Halteabschnitts 120 angeordneten Griffabschnitt 122 und einen auf der dem Halteabschnitt 120 abgewandten Seite des Griffabschnitts 122 angeordneten Auslaufabschnitt 124 umfasst.

Die Schlauchbrause 116 enthält eine (nicht dargestellte) Mischwasserleitung, welche einerseits an einem Ausgang eines im Sockel 102 angeordneten Sperrventils 126 angeschlossen ist und andererseits an einer Stirnseite 128 des Auslaufabschnitts 124 der Schlauchbrause 116 in den Außenraum der Schlauchbrause 116 mündet.

Der Schlauchabschnitt 118 der Schlauchbrause 116 ist biegeflexibel ausgebildet und kann insbesondere eine Ummantelung 130, die vorzugsweise aus einem Wellschlauch gebildet ist, umfassen.

Die Ummantelung 130 kann insbesondere aus einem metallischen Material, beispielsweise aus einem Edelstahlmaterial, gebildet sein.

Der Halteabschnitt 120 der Schlauchbrause 116 ist vorzugsweise zumindest abschnittsweise komplementär zu der Schlauchbrausen-Aufnahme 112 des Arms 104 ausgebildet und vorzugsweise so ausgebildet, dass er in einer in den Fig. 1 bis 3 dargestellten Ruheposition der Schlauchbrause 116 lösbar an der Schlauchbrausen-Aufnahme 112 festlegbar ist.

Die lösbare Festlegung des Halteabschnitts 120 der Schlauchbrause 116 an der Schlauchbrausen-Aufnahme 112 des Arms 104 kann beispielsweise durch Formschluss und/oder durch Kraftschluss erfolgen.

Insbesondere kann vorgesehen sein, dass der Halteabschnitt 120 durch Magnetkraft an der Schlauchbrausen-Aufnahme 112 festlegbar ist.

Hierzu kann insbesondere vorgesehen sein, dass der Halteabschnitt 120 ein Permanentmagnetelement umfasst und die Schlauchbrausen-Aufnahme 112 ein magnetisierbares, insbesondere ferromagnetisches, Material enthält.

Umgekehrt kann auch vorgesehen sein, dass der Halteabschnitt 120 ein magnetisierbares, insbesondere ferromagnetisches, Material umfasst und die Schlauchbrausen-Aufnahme 112 ein Permanentmagnetelement umfasst.

Der Griffabschnitt 122 der Schlauchbrause 116 ist dafür vorgesehen, dass eine Bedienungsperson an dem Griffabschnitt 122 angreift, um die Schlauchbrause 116 aus ihrer Ruheposition, in welcher der Halteabschnitt 120 lösbar an der Schlauchbrausen-Aufnahme 112 festgelegt ist, zu lösen und in eine Arbeitsposition zu bewegen, in welcher Wasser aus dem Auslaufabschnitt 124 der Schlauchbrause 116 auslaufen soll.

Der Griffabschnitt 122 kann mit einem von der Bedienungsperson betätigbaren Schalter 132 versehen sein, mittels welchem der Durchtritt von Wasser durch den Griffabschnitt 122 der Schlauchbrause 116 freigegeben oder gesperrt werden kann und/oder mittels welchem zwischen verschiedenen Strahlformen des aus der Schlauchbrause 116 austretenden Wasserstrahls umgeschaltet werden kann.

Beispielsweise kann vorgesehen sein, dass der Austrittsquerschnitt und/oder der Austrittswinkel des Wasserstrahls an der Austrittsöffnung des Auslaufabschnitts 124 mittels des Schalters 132 veränderbar sind.

Das Sperrventil 126 ist stromabwärts von einem Mischwasserausgang 134 eines Mischventils 136 angeordnet, welches vorzugsweise in dem Sockel 102 der Armatur 100 angeordnet ist.

An einen Warmwassereingang 138 des Mischventils 136 ist eine Warmwasser-Zuführleitung 140 angeschlossen, welche aus dem Sockel 102 heraus in den Außenraum 142 der Armatur 100 und dort zu einer (nicht dargestellten) Warmwasserquelle führt.

An einen Kaltwassereingang 144 des Mischventils 136 ist eine Kaltwasser-Zuführleitung 146 angeschlossen, welche aus dem Sockel 102 heraus in den Außenraum 142 der Armatur 100 und dort zu einer (nicht dargestellten) Kaltwasserquelle führt.

Der Volumenstrom und die Temperatur des durch den Mischwasserausgang 134 des Mischventils 136 strömenden Mischwassers sind mittels des Mischventils 136 einstellbar.

Beispielsweise kann das Mischventil 136 einen Betätigungshebel 148 umfassen, der in zwei Freiheitsgraden beweglich ist, beispielsweise durch Drehung um eine (im montierten Zustand der Armatur 100 schräg zur Horizontalen oder im Wesentlichen horizontal ausgerichtete) Schwenkachse 150 und durch Verkippen gegenüber der Schwenkachse 150.

Dabei bestimmt einer der Bewegungsfreiheitsgrade des Betätigungshebels 148, beispielsweise die Drehung, das Verhältnis, in welchem das Warmwasser aus dem Warmwassereingang 138 des Mischventils 136 und das Kaltwasser aus dem Kaltwassereingang 144 des Mischventils 136 miteinander gemischt werden, und somit die Temperatur des den Mischwasserausgang 134 des Mischventils 136 verlassenden Mischwassers, während der jeweils andere Bewegungsfreiheitsgrad des Betätigungshebels 148, beispielsweise die Verkippung, den Volumenstrom durch den Mischwasserausgang 134 des Mischventils 136 bestimmt.

Das Sperrventil 126, welches vorzugsweise stromabwärts von dem Mischventil 136 angeordnet ist, dient dazu, den Durchtritt von Wasser durch die Schlauchbrause 116 zu sperren oder freizugeben.

Das Sperrventil 126 kann beispielsweise als ein Elektromagnetventil ausgebildet sein.

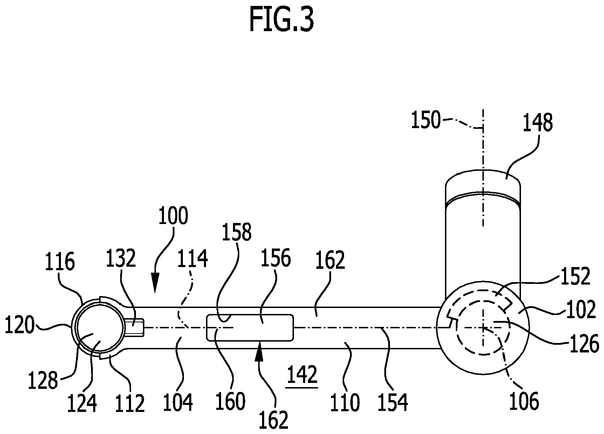

Das Sperrventil 126 wird von einer Steuervorrichtung 152 angesteuert, welches vorzugsweise über eine Signalleitung 154 mit einem Sensor 156 verbunden ist (siehe Fig. 3).

Die Steuervorrichtung 152 und der Sensor 156 sind über (nicht dargestellte) elektrische Versorgungsleitungen an eine (nicht dargestellte) Spannungsquelle, beispielsweise an das Haushalts-Stromnetz oder an eine Batterie oder einen Akku, angeschlossen.

Der Sensor 156 ist an dem Arm 104 der Armatur 100, und zwar an dem Auslegerabschnitt 110 des Armes 104, angeordnet.

Insbesondere kann vorgesehen sein, dass der Arm 104 eine Sensoraufnahme 158 aufweist, in welcher der Sensor 156 zumindest teilweise, vorzugsweise im Wesentlichen vollständig, aufgenommen ist.

Die Sensoraufnahme 158 weist eine Sensoröffnung 160 auf, durch welche der Sensor 156 vom Außenraum 142 der Armatur 100 aus zugänglich ist und durch welche der Außenraum 142 der Armatur 100 vom Sensor 156 aus zugänglich ist.

Die Sensoröffnung 160 kann durch eine, vorzugsweise transparente, Abdeckung verschlossen sein.

Die Sensoröffnung 160 ist vorzugsweise an einer (insbesondere dem Sockel 102 zugewandten) Unterseite 162 des Arms 104, insbesondere des Auslegerabschnitts 110 des Arms 104, angeordnet.

Der Arm 104, insbesondere der Auslegerabschnitt 110 des Arms 104, weist in dem Bereich desselben, an dem der Sensor 156 angeordnet ist, vorzugsweise einen im Wesentlichen rechteckigen oder ovalen - senkrecht zur Längsachse 114 des Auslegerabschnitts 110 genommenen - Querschnitt auf.

Der Sensor 156 ist so ausgebildet, dass er eine Anwesenheit und/oder eine Bewegung einer Hand einer Bedienungsperson in einem Detektionsbereich 164 des Sensors 156 erfasst und im Falle der Erfassung ein Signal erzeugt, welches der Sensor 156 an die Steuervorrichtung 152 des Sperrventils 126 übermittelt.

Das Signal kann über die Signalleitung 154 übermittelt werden. Alternativ hierzu kann auch eine Vorrichtung zum drahtlosen Übertragen des Signals vom Sensor 156 zur Steuervorrichtung 152 vorgesehen sein.

In Reaktion auf das übermittelte Signal schaltet die Steuervorrichtung 152 das Sperrventil 126 um, also von der Sperrstellung, in welcher der Durchtritt von Wasser durch die Schlauchbrause 116 mittels des Sperrventils 126 gesperrt ist, in die Freigabestellung, in welcher das Sperrventil 126 den Durchtritt von Wasser durch die Schlauchbrause 116 freigibt, oder von der Freigabestellung wieder zurück in die Sperrstellung.

Der Detektionsbereich 164 ist vorzugsweise unterhalb des Armes 104, vor der Sensoröffnung 160, angeordnet.

Die Bedienungsperson, welche die Armatur 100 bedient, kann also den Durchtritt von Wasser durch die Schlauchbrause 116 starten, indem sie eine Hand in den Detektionsbereich 164 des Sensors 156 bewegt, und den Durchtritt von Wasser durch die Schlauchbrause 116 zu einem späteren Zeitpunkt wieder stoppen, indem sie erneut eine Hand in den Detektionsbereich 164 des Sensors 156 bewegt.

Die Detektion der Anwesenheit und/oder der Bewegung der Hand der Bedienungsperson in dem Detektionsbereich 164 erfolgt dabei vorzugsweise berührungsfrei, das heißt ohne dass die Hand der Bedienungsperson in Kontakt mit dem Sensor 156 kommt.

Im montierten Zustand der Armatur 100 ist der horizontale Abstand d_{B} des Sensors 156 von der Schlauchbrause 116, insbesondere von dem Griffabschnitt 122 und/oder von dem Halteabschnitt 120 der an der Schlauchbrausen-Aufnahme 112 gehaltenen Schlauchbrause 116, vorzugsweise kleiner als der horizontale Abstand ds des Sensors 156 von der Schwenkachse 106, um welche der Arm 104 relativ zu dem Sockel 102 schwenkbar ist.

Der Sensor 156 ist also näher an der Schlauchbrause 116 (in der Ruheposition der Schlauchbrause 116) angeordnet als an der Schwenkachse 106.

Die Hand einer Bedienungsperson muss daher nur einen kleinen Weg von der Schlauchbrausen-Aufnahme 112 zum Detektionsbereich 164 des Sensors 156 oder von dem Detektionsbereich 164 des Sensors 156 zu der Schlauchbrausen-Aufnahme 112 zurücklegen, was die Betätigung des Sperrventils 126 mittels des Sensors 156 durch die Bedienungsperson vereinfacht und beschleunigt.

Dabei sind der Sensor 156 und die Sensoröffnung 160 für eine Bedienungsperson, welche die Armatur 100 aus einer Position oberhalb des Armes 104 betrachtet, nicht sichtbar.

Der Sensor 156 kann grundsätzlich als ein beliebiger Annäherungs- und/oder Bewegungssensor ausgebildet sein.

Beispielsweise kann der Sensor 156 als ein Infrarotsensor, Ultraschallsensor, induktiver Sensor oder kapazitiver Sensor ausgebildet sein.

Vorzugsweise ist vorgesehen, dass der Sensor 156 als ein Infrarotsensor ausgebildet ist.

Insbesondere kann vorgesehen sein, dass der Sensor 156 eine Strahlung, beispielsweise eine Infrarotstrahlung oder eine Ultraschallstrahlung, emittiert, die von der Hand einer Bedienungsperson reflektiert und dann von dem Sensor 156 detektiert wird.

Um unnötigen Wasserverbrauch zu vermeiden, kann vorgesehen sein, dass die Steuervorrichtung 152 so ausgebildet ist, dass sie das Sperrventil 126 nach einer vorgegebenen Öffnungszeit von der Freigabestellung in die Sperrstellung umschaltet, auch wenn die Steuervorrichtung 152 kein entsprechendes Signal von dem Sensor 156 erhält.

## Patentansprüche

1. Armatur, umfassend
einen Sockel (102),
eine Schlauchbrause (116) und
einen an dem Sockel (102) gehaltenen Arm (104), wobei der Arm (104) um eine Schwenkachse (106) schwenkbar an dem Sockel (102) gehalten ist und einen Basisabschnitt (108), einen sich im Wesentlichen in der Radialrichtung der Schwenkachse (106) von dem Basisabschnitt (108) weg erstreckenden Auslegerabschnitt (110) und eine an dem dem Basisabschnitt (108) abgewandten Ende des Auslegerabschnitts (110) angeordnete Schlauchbrausen-Aufnahme (112), an welcher die Schlauchbrause (116) in einer Ruheposition lösbar gehalten ist, umfasst,
wobei die Armatur (100) einen Sensor (156) für die Erfassung einer Anwesenheit und/oder einer Bewegung einer Hand einer Bedienungsperson in einem Detektionsbereich (164) des Sensors (156) umfasst,
**dadurch gekennzeichnet,**
**dass** der Sensor (156) an dem Auslegerabschnitt (110) des Armes (104) angeordnet ist.

2. Armatur nach Anspruch 1, **dadurch gekennzeichnet, dass** der Arm (104) eine Sensoraufnahme (158) aufweist, in welcher der Sensor (156) zumindest teilweise, vorzugsweise im Wesentlichen vollständig, aufgenommen ist.

3. Armatur nach Anspruch 2, **dadurch gekennzeichnet, dass** die Sensoraufnahme (158) eine Sensoröffnung (160) aufweist, durch welche der Sensor (156) von einem Außenraum (142) der Armatur (100) aus zugänglich ist.

4. Armatur nach einem der Ansprüche 1 bis 3, **dadurch gekennzeichnet, dass** der Detektionsbereich (164) des Sensors (156) seitlich neben dem Arm (104) oder unterhalb des Arms (104) angeordnet ist.

5. Armatur nach einem der Ansprüche 1 bis 4, **dadurch gekennzeichnet, dass** der Arm (104) in dem Bereich, an dem der Sensor (156) angeordnet ist, einen im Wesentlichen rechteckigen oder ovalen Querschnitt aufweist.

6. Armatur nach einem der Ansprüche 1 bis 5, **dadurch gekennzeichnet, dass** der Sensor (156) einen Infrarotsensor umfasst.

7. Armatur nach einem der Ansprüche 1 bis 6, **dadurch gekennzeichnet, dass** die Armatur (100) eine Steuervorrichtung (152) umfasst, welche ein Sperrventil (126) ansteuert, das den Durchtritt von Wasser durch die Schlauchbrause (116) freigibt oder sperrt, wenn der Sensor (156) eine Anwesenheit und/oder eine Bewegung einer Hand einer Bedienungsperson in dem Detektionsbereich (164) des Sensors (156) erfasst.

8. Armatur nach einem der Ansprüche 1 bis 7, **dadurch gekennzeichnet, dass** die Schlauchbrause (116) einen Schalter (132) zum Freigeben und/oder Sperren des Durchtritts von Wasser durch die Schlauchbrause (116) und/oder zum Umschalten zwischen verschiedenen Strahlformen des aus der Schlauchbrause (116) austretenden Wasserstrahls umfasst.

9. Armatur nach Anspruch 8, **dadurch gekennzeichnet, dass** der Schalter (132) an einem Griffabschnitt (122) der Schlauchbrause (116) angeordnet ist.

10. Armatur nach einem der Ansprüche 8 oder 9, **dadurch gekennzeichnet, dass** der Schalter (132) tiefer als der Sensor (156) angeordnet ist, wenn die Schlauchbrause (116) in der Ruheposition an dem Arm (104) gehalten ist.

11. Armatur nach einem der Ansprüche 1 bis 10, **dadurch gekennzeichnet, dass** die Schlauchbrause (116) einen biegeflexiblen Schlauchabschnitt (118) umfasst.

12. Armatur nach einem der Ansprüche 1 bis 11, **dadurch gekennzeichnet, dass** im montierten Zustand der Armatur (100) der horizontale Abstand (d_{B}) des Sensors (156) von einem Halteabschnitt (120) der Schlauchbrause (116), welcher lösbar an der Schlauchbrausen-Aufnahme (112) festgelegt ist, kleiner ist als der horizontale Abstand (d_{S}) des Sensors (156) von der Schwenkachse (106).

13. Armatur nach einem der Ansprüche 1 bis 12, **dadurch gekennzeichnet, dass** der Sensor (156) für eine Bedienungsperson bei Betrachten der Armatur (100) aus einer Position oberhalb des Arms (104) nicht sichtbar ist.

## Claims

1. Faucet, comprising
a base (102),
a hose spray unit (116) and
an arm (104) held on the base (102), wherein the arm (104) is held pivotable about a pivot axis (106) on the base (102) and comprises a base portion (108), a cantilevered portion (110) extending substantially in the radial direction of the pivot axis (106) away from the base portion (108) and a hose spray unit receptacle (112), arranged at the end of the cantilevered portion (110) facing away from the base portion (108), on which the hose spray unit (116) is releasably held in a rest position, wherein the faucet (100) comprises a sensor (156) for the detection of a presence and/or a movement of a hand of an operating person in a detection region (164) of the sensor (156),
**characterised in that**
the sensor (156) is arranged on the cantilevered portion (110) of the arm (104).

2. Faucet according to claim 1, **characterised in that** the arm (104) has a sensor receptacle (158) in which the sensor (156) is at least partially, preferably substantially completely, received.

3. Faucet according to claim 2, **characterised in that** the sensor receptacle (158) has a sensor aperture (160) through which the sensor (156) is accessible from an exterior (142) of the faucet (100).

4. Faucet according to any one of the claims 1 to 3, **characterised in that** the detection region (164) of the sensor (156) is arranged laterally beside the arm (104) or beneath the arm (104).

5. Faucet according to any one of the claims 1 to 4, **characterised in that** in the region in which the sensor (156) is arranged, the arm (104) has a substantially rectangular or oval cross-section.

6. Faucet according to any one of the claims 1 to 5, **characterised in that** the sensor (156) comprises an infrared sensor.

7. Faucet according to any one of the claims 1 to 6, **characterised in that** the faucet (100) comprises a control device (152) which controls a stop valve (126) that permits or blocks the passage of water through the hose spray unit (116) when the sensor (156) detects a presence and/or a movement of a hand of an operating person in the detection region (164) of the sensor (156).

8. Faucet according to any one of the claims 1 to 7, **characterised in that** the hose spray unit (116) comprises a switch (132) for permitting and/or blocking the passage of water through the hose spray unit (116) and/or for switching over between different jet forms of the water jet emerging from the hose spray unit (116).

9. Faucet according to claim 8, **characterised in that** the switch (132) is arranged on a handle portion (122) of the hose spray unit (116).

10. Faucet according to either one of the claims 8 or 9, **characterised in that** in the switch (132) is arranged lower than the sensor (156) when the hose spray unit (116) is held in the rest position on the arm (104).

11. Faucet according to any one of the claims 1 to 10, **characterised in that** the hose spray unit (116) comprises a bendingly flexible hose portion (118).

12. Faucet according to any one of the claims 1 to 11, **characterised in that**, in the assembled state of the faucet (100), the horizontal spacing (d_{B}) of the sensor (156) from a holding portion (120) of the hose spray unit (116), which is releasably fixed on the hose spray unit receptacle (112), is smaller than the horizontal spacing (ds) of the sensor (156) from the pivot axis (106).

13. Faucet according to any one of the claims 1 to 12, **characterised in that** the sensor (156) is not visible to an operating person on observing the faucet (100) from a position above the arm (104).

## Revendications

1. Mitigeur, comprenant un socle (102), un flexible de douche (116) et un bras (104) maintenu sur le socle (102), le bras (104) étant maintenu sur le socle (102) de manière à pouvoir pivoter autour d'un axe de pivotement (106), et une base (108), un bec (110) s'éloignant pour l'essentiel dans le sens radial de l'axe de pivotement (106) par rapport à la base (108), et un logement de flexible de douche (112) disposé sur l'extrémité du bec (110) opposée à la base (108) et sur lequel le flexible de douche (116) est maintenu mobile dans une position de repos, le mitigeur (100) comprenant un capteur (156) destiné à la détection d'une présence et/ou d'un mouvement d'une main d'un utilisateur dans une zone de détection (164) du capteur (156) ,
**caractérisé en ce que** le capteur (156) est disposé sur le bec (110) du bras (104).

2. Mitigeur selon la revendication 1, **caractérisé en ce que** le bras (104) présente un logement de capteur (158) dans lequel le capteur (156) est logé au moins en partie, de préférence pour l'essentiel complètement.

3. Mitigeur selon la revendication 2, **caractérisé en ce que** le logement de capteur (158) présente un orifice de capteur (160) à travers lequel le capteur (156) est accessible depuis un espace extérieur (142) du mitigeur (100).

4. Mitigeur selon l'une quelconque des revendications 1 à 3, **caractérisé en ce que** la zone de détection (164) du capteur (156) est disposée latéralement à côté du bras (104) ou sous le bras (104).

5. Mitigeur selon l'une quelconque des revendications 1 à 4, **caractérisé en ce que** le bras (104) a, dans la zone où le capteur (156) est disposé, une section pour l'essentiel rectangulaire ou ovale.

6. Mitigeur selon l'une quelconque des revendications 1 à 5, **caractérisé en ce que** le capteur (156) comprend un capteur infrarouge.

7. Mitigeur selon l'une quelconque des revendications 1 à 6, **caractérisé en ce que** le mitigeur (100) comprend un dispositif de commande (152) qui commande une valve d'arrêt (126) qui libère ou bloque le passage de l'eau à travers le flexible de douche (116) lorsque le capteur (156) détecte une présence et/ou un mouvement d'une main d'un utilisateur dans la zone de détection (164) du capteur (156).

8. Mitigeur selon l'une quelconque des revendications 1 à 7, **caractérisé en ce que** le flexible de douche (116) comprend un commutateur (132) pour libérer et/ou bloquer le passage de l'eau à travers le flexible de douche (116) et/ou pour basculer entre différentes formes de jet du jet d'eau sortant du flexible de douche (116).

9. Mitigeur selon la revendication 8, **caractérisé en ce que** le commutateur (132) est disposé sur une poignée (122) du flexible de douche (116).

10. Mitigeur selon l'une quelconque des revendications 8 ou 9, **caractérisé en ce que** le commutateur (132) est disposé plus bas que le capteur (156) lorsque le flexible de douche (116) est maintenu en position de repos sur le bras (104).

11. Mitigeur selon l'une quelconque des revendications 1 à 10, **caractérisé en ce que** le flexible de douche (116) comprend une section de tuyau souple en flexion (118).

12. Mitigeur selon l'une quelconque des revendications 1 à 11, **caractérisé en ce que**, lorsque le mitigeur (100) est en place, la distance horizontale (d_{B}) du capteur (156) par rapport à un élément de maintien (120) du flexible de douche (116), lequel est fixé de manière mobile sur le logement (112) du flexible de douche, est inférieure à la distance horizontale (ds) du capteur (156) par rapport à l'axe de pivotement (106).

13. Mitigeur selon l'une quelconque des revendications 1 à 12, **caractérisé en ce que** le capteur (156) est invisible pour un utilisateur qui regarde le mitigeur (100) depuis une position au-dessus du bras (104).
